# EUROPÄISCHE PATENTANMELDUNG

(11) **EP 1 198 089 A2**
(43) Veröffentlichungstag der Anmeldung: **17.04.2002**
(21) Anmeldenummer: 01440293.7
(22) Anmeldetag: 11.09.2001
(51) Int. Cl.: H04J 13/00, H04J 14/00

(54) **Multicasting in einem OCDM-Netzwerk**

(30) Priorität: 18.10.2000 DE 10051633
(71) Anmelder: ALCATEL, 75008 Paris (FR)
(72) Erfinder: Pfeiffer, Thomas, Dr., 70569 Stuttgart (DE); Körber, Wolfgang, Dr., 70329 Stuttgart (DE)
(74) Vertreter: Rausch, Gabriele, Dr.

(57) **Zusammenfassung**

Die Erfindung geht aus von einem optisches Netzwerk unter Verwendung des OCDM (Optical Code Division Multiplex)- Verfahrens mit einer Vielzahl von Sendern, Netzknoten und Empfängern, die mit Übertragungsstrecken verbunden sind, wobei im Netzwerk unterschiedliche Gruppen von Netzknoten definiert sind und die Gruppen von Netzknoten unterschiedliche optische Signale auswerten.

## Beschreibung

Die Erfindung geht aus von einem optisches Netzwerk unter Verwendung des OCDM (Optical Code Division Multiplex)- Verfahrens mit einer Vielzahl von Sendern, Netzknoten und Empfängern, die mit Übertragungsstrecken verbunden sind, wobei im Netzwerk unterschiedliche Gruppen von Netzknoten definiert sind und die Gruppen von Netzknoten unterschiedliche optische Signale auswerten.

Weiterhin geht die Erfindung aus von einem Verfahren zur Übertragung von Informationen an unterschiedliche Gruppen von Netzknoten, wobei optisch kodierte Signale zur Übertragung verwendet werden, und wobei eine erste Gruppe von Signalen mit einem Superkode optisch kodiert werden, und die optisch kodierten Signale an Netzknoten dekodiert werden , und wobei in mindestens einer Gruppe von Netzknoten superkodierte Signale ausgewertet werden.

Weiterhin geht die Erfindung aus von einem Sender zur Übertragung von optisch kodierten Signalen mit einer breitbandigen Lichtquelle und einem Mittel zur Erzeugung eines optischen Kodes, und einer Kodiereinheit zur Erzeugung eines optischen Superkodes.

Ein Sender mit Filterbonk der mit der Übertragungsstecke in das Netzwerk verbunden ist, wobei die Filterbank eine der Zahl der Empfängerknoten entsprechende Zahl von Filtern enthält und wobei die Ausgänge der Filter über optische Schalter mit dem Netzwerk verbunden werden können, oder ein Sender mit konfigurierbarem optischem Filter das den Superkode direkt erzeugt, dient als Komponente im erfindungsgemäßen Netzwerk.

Weiterhin ist auch ein Netzknoten in einem OCDM Netzwerk mit einem Dekodierer zum Dekodieren des Superkodes erfindungsgemäßer Gegenstand.

Optische Netzwerke zur Übertragung von optischen Datensignalen sind aus der Literatur bekannt. Dabei wird grundsätzlich zwischen Zugangsnetzen und Transportnetzen für die Übertragung von Daten unterschieden. Die Zugangsnetze, die den Zugang zum Verbraucher gewährleisten, zeichnen sich durch komplexe Netzstrukturen aus. Die Systemvielfalt dieser vor allem dienstespezifischen Zugangssysteme ist sehr groß. Innerhalb eines Kommunikationsnetzes hat das Zugangsnetz die Aufgabe, den Teilnehmern den Zugang zu Vermittlungseinrichtungen beispielsweise Servern zu ermöglichen. Jeder Teilnehmer muss zunächst von seinem Standort aus an einen Versorgungsknoten angeschlossen werden, damit er die angebotenen Dienste überhaupt in Anspruch nehmen kann. Für den Anschluss der Teilnehmer sind grundsätzlich alle nachrichtentechnischen Mittel geeignet. Im Fernnetz wird der Fernmeldeverkehr konzentriert in Punkt-zu-Punkt-Verbindungen zwischen den verschiedenen Netz- und Vermittlungsknoten geführt. Im Zugangsnetz hingegen sind sehr unterschiedliche Anforderungen zu erfüllen. Es müssen für das technische Zusammenwirken zwischen der Teilnehmervermittlungsstelle und den Endstellen standardisierte Funktionen (BORSCHT) implementiert sein. Die Teilnehmer selbst sind nicht homogen über den ganzen Zugangsbereich verteilt, sondern es gibt lokale Bereiche mit hohen Teilnehmerdichten, aber auch Bereiche in denen die Teilnehmer nur vereinzelt auftreten. Ausgehend vom jeweiligen Kommunikationsbedarf können sehr unterschiedliche Teilnehmergruppen wie Privatkunden, kleinere oder größere Geschäftskunden unterschieden werden, denen entsprechend übertragungstechnische Lösungen angeboten werden müssen. Gerade die Zugangsnetze erfordern eine große Investitionsbereitschaft des Netzbetreibers. Die Komponenten sind Umwelteinflüssen ausgesetzt und müssen jeweils den Teilnehmern des Zugangsnetzes einzeln zur Verfügung gestellt werden.
Ein Verfahren zum Aufbau von Zugangsnetzen ist aus der noch nicht veröffentlichten deutschen Anmeldung 199 04 940.8 bekannt. Ein solches Übertragungssystem für kodierte optische Signale besteht aus optischen Übertragungsleitungen, optischen Splittern sowie gegebenenfalls optischen Verstärkern und dient zur Übertragung codierter gemultiplexter optischer Signale. Jeder Sender enthält einen Kodierer, in dem die zu übertragenden Signale vor ihrer Aussendung ins optische Übertragungsnetz kodiert werden. Die Kodierung erfolgt auf optischem Wege, z.B. durch Frequenzkodierung mit einem optischen Filter. Jeder Empfänger, der die Daten eines speziellen Senders empfangen will, muss einen Dekodierer enthalten, der auf den Kodierer dieses bestimmten Senders abgestimmt ist. Im einfachsten Fall sind die Frequenzbereiche, die für optische Signale durchlässig und die Frequenzbereiche, die für optische Signale gesperrt sind, beim Kodierer und beim Dekodierer gleich. Die CDM (Code Division Multiplex)-Verfahren eignen sich vor allem für die Übertragung von nicht all zu hohen Bitraten. Für einen Einsatz als Multipunkt zu Multipunkt Netz, wie es z.B. ein LAN darstellt, ist das CDM-Verfahren geeignet.
Die bisher bekannten CDM-Verfahren können, im Gegensatz zu Broadcasting (Punkt zu Mehrpunkt-Verbindung unter Einbeziehung aller Empfangspunkte), keine Multicastfunktion, das heisst keine Punkt zu Mehrpunkt- Verbindung nur zu ausgewählten Empfangspunkten herstellen.

Das erfindungsgemäße Netzwerk und die erfindungsgemäßen Komponenten des Netzwerk machen Multicast-Verbindungen möglich.

Durch die in den nebengeordneten Ansprüchen aufgeführten Komponenten und Verfahren sind vorteilhafte Weiterbildungen und Verbesserungen des optischen Netzwerkes möglich. Ausführungsbeispiele der Erfindung sind in der Zeichnung dargestellt und in der nachfolgenden Beschreibung näher erläutert.

Es zeigt
- Fig. 1: ein optisches Netz
- Fig. 2: Sender mit Filterbank eines optischen Netzes.

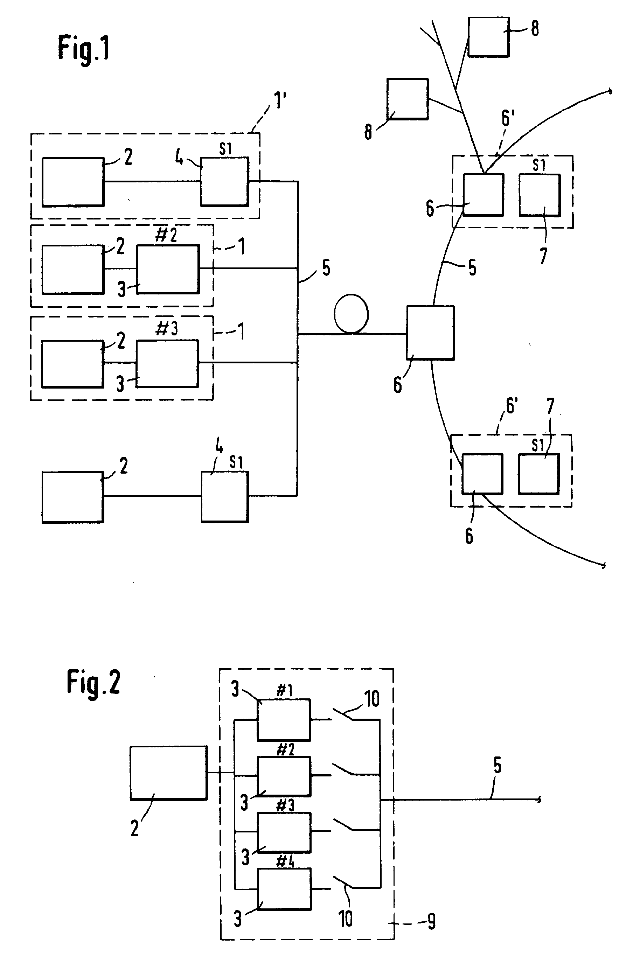

Fig. 1 zeigt vier Sender 1 und 1', deren Ausgänge über Übertragungsstrecken 5 mit einem oder mehreren Netzknoten 6 und 6' verbunden sind. Die Netzknoten 6 und 6' sind über weitere Übertragungsstrecken 5 mit weiteren Netzknoten 6 und 6' verbunden. Die Sender 1 enthalten eine breitbandige Lichtquelle 2, die mit einem optischen Kodierer 3 verbunden sind. In den Sendern 1' sind anstelle der optischen Kodierer 3 Kodiermittel für Superkode 4 enthalten. Ein Netzknoten 6' ist Teilnehmer einer, durch den Superkode ausgewählten Multicast-Gruppe, benötigt dazu aber keine Dekodiermittel oder Umsetzmittel zusätzlich zu den auch in den anderen Netzknoten 6 enthaltenen Dekodiermitteln und Umsetzmitteln. D.h. jeder Netzknoten 6 ist ein potentieller Multicast-Knoten 6'. An den Netzknoten 6' ist eine weitere Übertragungsstrecke 5 und eine Vielzahl von optischen Empfängern 8 angeschlossen.

Das Licht der breitbandigen Lichtquelle 2 wird im optischen Kodierer 3 kodiert. Das Ergebnis ist ein breitbandiges strukturiertes Signal in Form eines Kammmusters, das von einem Empfänger mit abgestimmten Dekodierer empfangen und ausgewertet werden kann. Das Signal einer solchen Quelle mit einem Kode 2 oder einem Kode 4 lässt sich von jedem Netzknoten 6 im Netzwerk empfangen. Das Licht der Sender 1' durchläuft anstatt des optischen Kodierers 3 ein Kodiermittel für Superkode 4. Dieser Superkode lässt sich nur von speziellen Netzknoten 6' auswerten. Das Aufprägen des Superkodes geschieht im Kodierer 4 entweder mit einem konfigurierbaren optischen Filter oder nach der Ausführungsform in Fig. 2.

Fig. 2 zeigt eine breitbandige Lichtquelle 2, die mit einer Filterbank 9 verbunden ist. In der Filterbank 9 befinden sich optische Kodierer 3 für die individuelle Kodierung der jeweiligen Sendersignale 1 bis 4. Die Ausgänge der optischen Kodierer 3 sind mit optischen Schaltern 10 verbunden. Die Überlagerung der über die Schalter 10 ausgewählten Kodes ergibt den Superkode. Die jeweiligen Ausgänge sind mit dem Netzwerk verbunden. Das beschriebene Verfahren ermöglicht auch ein Aussenden von Multicast-Signalen von einem Netzknoten 6. Dieser Netzknoten enthält in diesem Fall einen Kodierer für Superkode 4. Dieser Kodierer für Superkode 4 kodiert die optischen Signale so, dass nur eine ausgewählte Anzahl an Empfängern im Zugangsbereich das Signal dekodieren können. Dadurch ist es möglich, einer Gruppe von Empfängern Signale gleichzeitig zukommen zu lassen, während eine andere Gruppe diese Signale nicht empfängt. Ein solches Verfahren ist zum Aussenden unterschiedlichster Dienste anwendbar. Es sind hier beispielsweise Nachrichtendienste denkbar, die an eine Gruppe von Benutzern übermittelt werden. Nur diese Gruppe von Benutzern, die dafür bezahlen, erhalten die Information durch die Benutzung des speziellen Kodes gleichzeitig. Die anderen im selben Zugangsnetz befindlichen Benutzer können die Daten nicht dekodieren.

## Patentansprüche

1. Optisches Netzwerk unter Verwendung des OCDM (Optical Code Division Multiplex)- Verfahrens mit einer Vielzahl von Sendern, Netzknoten und Empfängern, die mit Übertragungsstrecken verbunden sind, wobei im Netzwerk unterschiedliche Gruppen von Netzknoten definiert sind und die Gruppen von Netzknoten unterschiedliche optische Signale auswerten.

2. Verfahren zur Übertragung von Informationen an unterschiedliche Gruppen von Netzknoten,
wobei optisch kodierte Signale zur Übertragung verwendet werden
und wobei mindestens eine Gruppe von Signalen mit einem Superkode optisch kodiert wird
und die optisch kodierten Signale an Netzknoten dekodiert werden
und wobei in mindestens einer Gruppe von Netzknoten superkodierte Signale ausgewertet werden.

3. Verfahren nach Anspruch 2 **dadurch gekennzeichnet, dass** der Superkode aus einer Überlagerung von Einzelkodes der anzusprechenden Gruppe von Netzknoten besteht.

4. Sender zur Übertragung von optisch kodierten Signalen mit einer breitbandigen Lichtquelle und einem Mittel zur Erzeugung eines optischen Kodes, **dadurch gekennzeichnet, dass** eine Kodiereinheit zur Erzeugung eines Superkodes enthalten ist.

5. Sender mit Filterbank der mit der Übertragungsstecke in das Netzwerk verbunden ist, wobei die Filterbank eine der Zahl der Empfängerknoten entsprechende Zahl von Filtern enthält und wobei die Ausgänge der Filter über optische Schalter mit dem Netzwerk verbunden sind.

6. Netzknoten in einem OCDM Netzwerk mit einem Dekodierer zum Dekodieren des Superkodes.
